# FASCICULE DE BREVET EUROPEEN

(11) **EP 2 774 250 B1**
(45) Date de publication et mention de la délivrance du brevet: **18.11.2020**
(21) Numéro de dépôt: 12801636.7
(22) Date de dépôt: 31.10.2012
(51) Int. Cl.: H02K 1/30, H02K 15/02

(54) **ROTOR DE MACHINE ELECTRIQUE**
ROTOR FÜR EINE ELEKTRISCHE MASCHINE
ROTOR OF AN ELECTRIC MACHINE

(30) Priorité: 03.11.2011 FR 1159964
(43) Date de publication de la demande: 10.09.2014
(73) Titulaire: Moteurs Leroy-Somer, 16000 Angouleme (FR)
(72) Inventeur: VOHLGEMUTH, Patrick, F-16110 La Rochefoucauld (FR)
(74) Mandataire: Nony
(86) Numéro de dépôt international: PCT/IB2012/056053
(87) Numéro de publication internationale: WO 2013/064998

(56) Documents cités:
- DE-A1-102006 000 426
- US-A- 4 080 724
- US-A- 4 365 180
- US-A1- 2005 127 775
- US-A1- 2008 201 936
- US-A1- 2011 016 929

## Description

La présente invention concerne les machines tournantes électriques et plus particulièrement les rotors, notamment d'alternateurs.

Il est connu de US 2005/127775 et US 2011/016929 un stator comportant un support et des secteurs de paquet de tôles reliés entre eux par des trous de fixation superposés entre eux.

Il est connu de US 6 975 057 de découper des secteurs destinés à la réalisation d'un circuit magnétique.

Il est également connu de US 6 741 005 notamment de découper en bande une tôle magnétique et de la cintrer pour former un circuit magnétique.

Il est connu de US 4 365 180, de DE 10 2006 000426 et US 2008/201936 des rotors comportant des secteurs magnétiques.

Il est connu de US 4 080724 un rotor présentant un support et des secteurs magnétiques. Le support est cependant dépourvu d'encoches.

Les circuits magnétiques d'induit d'excitatrice sont classiquement constitués d'un empilage de tôles. Les tôles d'induit sont très souvent découpées dans la partie centrale des tôles de l'inducteur, voire dans une bande de tôle spécifique si l'inducteur est découpé à part ou réalisé en fonte.

La consommation de tôle magnétique pour réaliser l'induit est alors égale soit à un cylindre, soit à un parallélépipède de dimensions équivalentes.

L'écart entre la tôle magnétique consommée et la matière réellement nécessaire à la conduction du flux magnétique est très important. Il n'est pas rare que la matière première utilisée représente le double de la matière utile au passage du flux.

L'invention vise à perfectionner encore la réalisation du circuit magnétique du rotor.

L'invention a pour objet, selon l'un de ses aspects, un rotor selon la revendication 1.

L'invention permet de réduire, par exemple d'environ un tiers, la quantité de matière consommée pour réaliser un induit d'excitatrice.

De plus, lorsque l'on découpe classiquement l'induit et l'inducteur sur un outil complet, donc dans la même tôle, ces deux composants sont de fait réalisés dans une nuance de matière qui correspond au même degré de performance magnétique.

Avec l'invention, le fait de dissocier le découpage des tôles servant à réaliser l'induit de celui des tôles servant à réaliser l'inducteur, offre la possibilité d'utiliser des nuances de matières différentes, en optimisant le choix de la nuance de matière au réel besoin de chacun des composants et donc de réduire le coût global.

Un autre avantage de l'invention est que le support peut être en tôle emboutie, et en conséquence, son encombrement longitudinal est inférieur à un empilage de tôles classique. On peut donc réduire la longueur globale de la machine en profitant de cet espace disponible pour y insérer une ou plusieurs fonctions telles qu'équilibrage, pont de diodes ou roulement de palier.

Les secteurs peuvent appartenir à des bandes de secteurs qui occupent chacune moins d'une révolution complète sur le rotor. En variante, les secteurs peuvent appartenir à une ou plusieurs bande(s) de secteurs enroulée(s) sur elle(s)-même(s) sur une ou plus d'une révolution complète. L'étendue angulaire de chaque bande de secteurs peut être comprise entre 60 et 360°, étant de préférence de 120°.

Chaque secteur peut comporter deux demi-dents, voire seulement deux demi-dents. En variante, chaque secteur comporte au moins une dent.

Le rotor comporte des secteurs sur les deux faces opposées du support. Dans ce cas, les bandes de secteurs sont avantageusement décalées angulairement d'une face du support à l'autre, ce qui améliore la cohésion mécanique du rotor. Le décalage est par exemple de 60°.

Les secteurs comportent de préférence plusieurs tôles magnétiques superposées, par exemple encliquetées les unes sur les autres. Les secteurs peuvent être reliés entre eux au niveau des dents. Au moins deux secteurs adjacents peuvent être reliés entre eux par un pont de matière venu de matière avec la tôle des secteurs.

Le rotor peut comporter une masselotte d'équilibrage, fixée sur le support.

D'autres composants peuvent être fixés sur le support, par exemple un pont de diodes servant à alimenter l'inducteur principal de l'alternateur, ou un circuit électronique de régulation de la tension aux bornes de l'inducteur principal.

Le support présente une forme générale discoïde.

Le support peut être formé par emboutissage d'une tôle. Le support peut comporter des nervures de rigidification s'étendant chacune en direction radiale.

Le support présente en périphérie des encoches qui se superposent avec des encoches des secteurs.

Le rotor peut comporter un évidement, notamment en forme de goute d'eau, adjacent au pont de matière reliant deux secteurs adjacents.

Le nombre de pôles du rotor est de préférence supérieur ou égal à 4.

Les secteurs sont de préférence réalisés dans une tôle à teneur massique en carbone inférieure ou égale à 0.07%.

Les bandes de secteurs peuvent porter des bobinages.

L'invention a encore pour objet un procédé de fabrication d'un rotor tel que défini ci-dessus, comportant les étapes consistant à :
- découper la bande de secteurs dans une tôle magnétique,
- cintrer la bande,
- fixer la bande sur le support, notamment à l'aide de rivets.

L'invention a encore pour objet une machine électrique tournante comportant un rotor selon l'invention.

Le stator peut avantageusement comporter des tôles définissant le circuit magnétique du stator, découpées dans une matière différente, par exemple à plus forte teneur en carbone, de celle servant à réaliser les secteurs du rotor.

La machine peut en particulier être un alternateur et le rotor selon l'invention constituer le rotor de l'excitatrice.

L'invention pourra être mieux comprise à la lecture de la description détaillée qui va suivre, d'un exemple de mise en œuvre non limitatif de celle-ci, et à l'examen du dessin annexé, sur lequel :
- la figure 1 représente, de façon schématique et partielle et en perspective, un exemple de rotor réalisé conformément à l'invention,
- la figure 2 représente le circuit magnétique du rotor, en place sur le support,
- la figure 3 représente isolément le support,
- la figure 4 représente une bande de secteurs avant cintrage,
- la figure 5 représente la bande de secteurs après cintrage,
- la figure 6 illustre le montage des bandes de secteurs sur le support,
- la figure 7 illustre la possibilité de fixer une masselotte d'équilibrage sur le support,
- les figures 8 et 9 représentent un détail de réalisation d'une tôle servant à la réalisation d'une bande de secteurs, et
- la figure 10 illustre la possibilité de fixer un composant électronique directement sur le support, afin de dissiper la chaleur dégagée par ce composant.

Le rotor 1 représenté sur les figures est un rotor d'excitatrice, mais l'invention n'est pas limitée à un tel rotor et peut s'appliquer aux rotors de diverses machines électriques tournantes, bobinés ou non, telles qu'à commutation de flux par exemple.

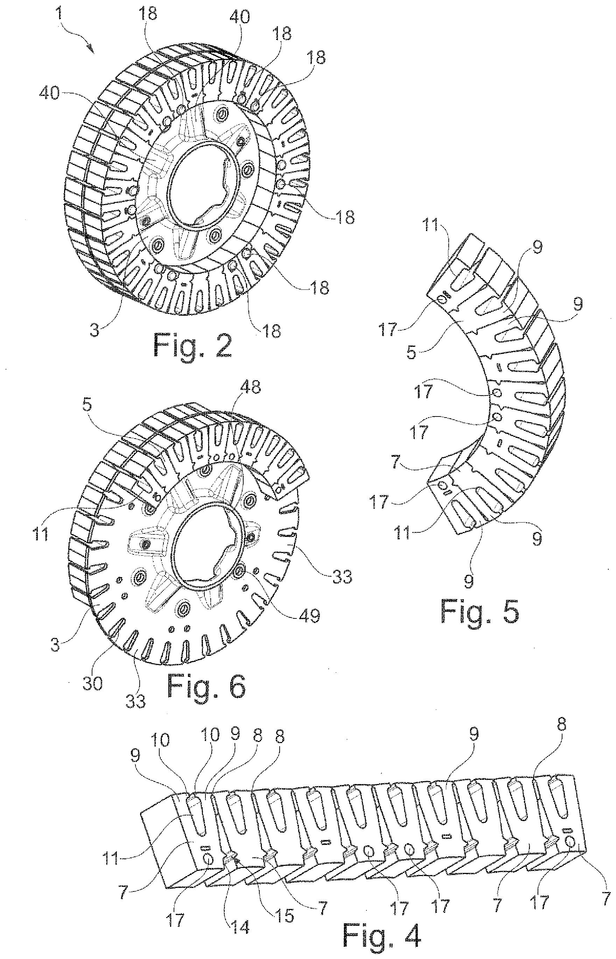

Le rotor 1 comporte, comme visible notamment sur la figure 2, un support 3 encore appelé jante, sur lequel sont fixées des bandes 5 de secteurs, dont l'une d'elles est représentée isolément à la figure 5.

La jante 3 est par exemple en tôle emboutie.

Chaque bande 5 est par exemple formée, comme illustré, d'une succession de secteurs 7, deux secteurs 7 adjacents pouvant présenter, sur leurs flancs en regard, deux reliefs 14 et 15 destinés à coopérer lorsque la bande est cintrée, tels que par exemple une dent et une encoche de formes complémentaires.

Certains secteurs 7 peuvent en outre présenter, comme illustré, un trou 17 permettant le passage d'un élément de fixation 18 sur la jante 3, tel que par exemple un rivet.

La bande 5 de secteurs peut comporter en particulier, comme illustré, deux secteurs d'extrémité 7 munis chacun d'un trou 17 et deux secteurs médians, également munis d'un trou 17.

Les reliefs 14 et 15, de même que les trous 17, sont formés de préférence à une faible distance du bord radialement extérieur des secteurs 7.

Chaque secteur 7 comporte deux demi-dents 9, qui délimitent entre elles une encoche 11, et sont pourvues chacune d'un épanouissement polaire 10. L'encoche 11 est ainsi ouverte sur l'extérieur.

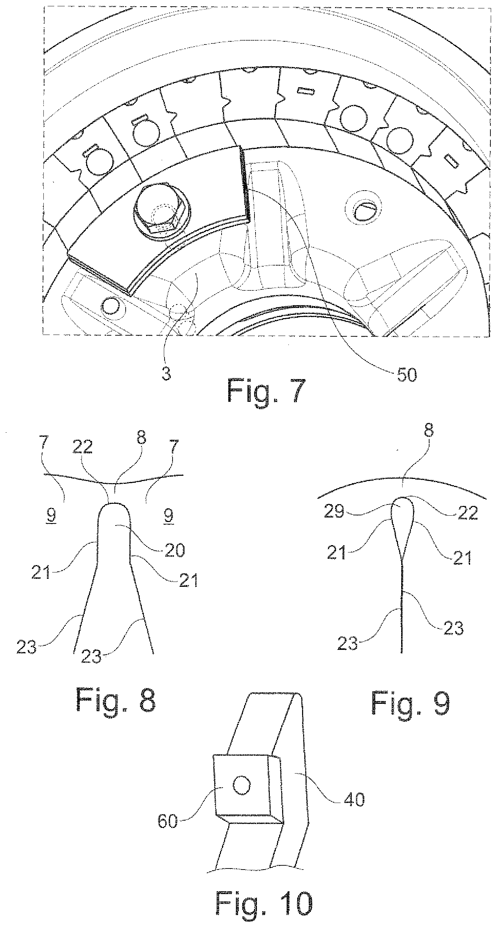

On a représenté à échelle agrandie sur la figure 8, le pont de matière 8 reliant deux secteurs 7 adjacents, avant leur mise en place sur la jante 3. Ce pont de matière 8 relie les secteurs 7 du côté des dents 9, de préférence sans faire saillie sur la surface cylindrique en regard de l'entrefer sur le rotor fini.

Le pont de matière 8 est délimité, du côté radialement intérieur, par un bord arrondi 22, relié à des bords initialement rectilignes et parallèles 21. Ces derniers se raccordent à des bords rectilignes 23 qui divergent initialement. La présence des bords 21 permet de ne pas fragiliser l'outil de découpe des tôles.

Lorsque les secteurs 7 sont rapprochés afin de donner à la bande 5 sa forme arquée définitive, visible sur la figure 5, les bords 21 se rapprochent et forment avec le bord 22 un profil en goutte d'eau, tandis que les bords 23 deviennent jointifs, comme illustré à la figure 9. Les évidements 29 délimités par les bords 21 et 22 ne sont pas apparents sur la figure 5.

La présence de l'évidement 29 au profil en goutte d'eau est peu gênante, car celui-ci se situe dans une région où le flux magnétique est faible durant le fonctionnement de la machine.

La jante 3 comporte à sa périphérie une succession d'encoches 30 qui se superposent aux encoches 11 lorsque les secteurs 7 sont en place. Les encoches 30 sont formées entre des dents 33 pourvues par exemple, comme illustré, d'épanouissements polaires qui se superposent aux épanouissements 10.

Ainsi, les secteurs 7 peuvent recevoir des bobinages 66 lorsque fixés sur la jante 3.

Les bandes 5 de secteurs 7 sont avantageusement disposées sur la jante 3 en étant décalées circonférentiellement d'une face à l'autre, comme illustré à la figure 6. Le décalage est par exemple de θ/2, où θ désigne l'étendue angulaire d'une bande 5 de secteurs 7, avec θ = 360/n où n est le nombre de bandes de secteurs utilisé pour faire une couronne complète.

Dans l'exemple illustré, θ vaut 120° et les bandes 5 de secteurs 7 sont décalées de 60° d'une face à l'autre. Ce décalage permet de faire coïncider le trou 17 d'un secteur d'extrémité d'une bande de secteurs située d'un côté de la jante 3 avec celui d'un secteur médian de la bande disposée du côté opposé de la jante 3.

La jante 3 peut être réalisée, comme illustré, avec des nervures de rigidification 40 qui s'étendent par exemple radialement depuis un moyeu 48, cylindrique de révolution autour de l'axe du rotor, destiné au montage sur un arbre non représenté.

La jante 3 est avantageusement réalisée en tôle emboutie.

Des perçages 49 peuvent être réalisés sur la jante 3 pour le montage sur celle-ci de divers composants, par exemple d'une masselotte d'équilibrage 50, comme illustré à la figure 7.

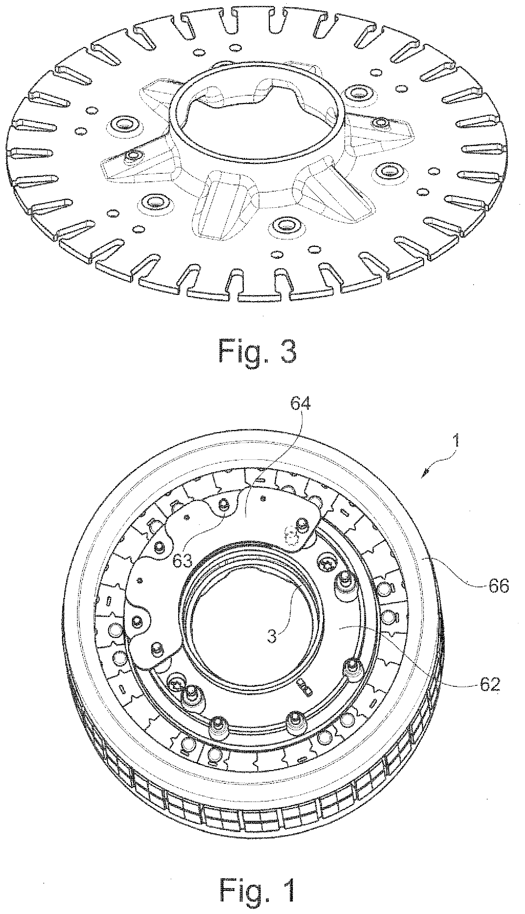

On peut encore disposer sur la jante 3, comme illustré à la figure 1, divers circuits électroniques, par exemple un redresseur. Sur cette figure, on voit que l'on peut fixer sur la jante 3 un support isolant 62, sur lequel repose un circuit imprimé 63 et un shunt en cuivre 64. Sur cette figure, les bobinages 66 du rotor sont représentés de façon schématique.

Chaque bande 5 de secteurs 7 peut être formée par un paquet de tôles superposées et encliquetées. Le découpage des tôles peut se faire en bandes en économisant la matière. Après découpage, la bande 5 présente par exemple une forme sensiblement droite, illustrée à la figure 4. On donne à la bande 5 sa forme définitive en la cintrant au niveau des ponts de matière 8.

Les encoches 11 peuvent être bobinées après fixation des secteurs 7 sur la jante 3.

On peut utiliser la jante 3 comme dissipateur thermique, le cas échéant, en fixant dessus le ou les composants à refroidir, comme illustré à la figure 10, où l'on voit une diode 60 fixée sur une semelle de réception formée sur la jante 3, par exemple au niveau d'une nervure de raidissement 40.

Le cas échéant, un passe fil ou un dégagement pour le cheminement de câbles électriques est intégré dans la jante 3.

Le circuit magnétique du rotor peut être réalisé avec des tôles à plus faible teneur en carbone que celles du stator, car l'induit d'excitatrice est moins sollicité magnétiquement.

On peut par exemple utiliser, pour réaliser les secteurs 7, un acier à teneur en carbone comprise entre 0 et 0.07%.

De préférence, le nombre de pôles du rotor est supérieur ou égal à 4, l'invention n'étant pas limitée à la polarité illustrée.

La jante 3 peut être réalisée dans un matériau magnétique ou non.

Dans une variante, la jante 3 est réalisée sans les encoches 30 ou sans les épanouissements polaires 33, ne s'étendant par exemple pas jusqu'à la périphérie du circuit magnétique du rotor.

Plutôt que d'utiliser plusieurs bandes de secteurs disposées les unes à la suite des autres pour reconstituer une couronne de chaque côté de la jante 3, on peut utiliser une bande de secteurs dont la longueur est telle que celle-ci s'étend sur une révolution complète ou plus d'une révolution complète autour de l'axe de rotation.

L'invention n'est pas limitée à l'exemple illustré. Par exemple, le rotor n'est pas bobiné et utilisé dans une machine à commutation de flux.

L'expression « comportant un » doit se comprendre comme étant synonyme de « comportant au moins un », sauf si le contraire est spécifié.

## Revendications

1. Rotor (1) de machine électrique tournante, notamment pour machine à rotor bobiné ou à commutation de flux, comportant :
- un support (3) de forme générale discoïde pour le montage du rotor sur un arbre,
- une pluralité de secteurs magnétiques (7) de préférence en bande (5), fixée sur le support,
le support (3) présente en périphérie des encoches (30) qui se superposent avec des encoches (11) des secteurs (7), **caractérisé en ce que** le rotor (1) comporte des secteurs (7) sur deux faces axialement opposées du support (3).

2. Rotor selon la revendication 1, les secteurs (7) appartenant à des bandes (5) de secteurs qui occupent chacune moins d'une révolution complète sur le rotor, ou les secteurs appartenant à une ou plusieurs bande(s) de secteurs enroulée(s) sur elle(s)-même(s) sur une révolution complète ou plus d'une révolution complète.

3. Rotor selon la revendication 1 ou 2, chaque secteur (7) comportant deux demi-dents (9), mieux ne comportant que deux demi-dents (9).

4. Rotor selon l'une quelconque des revendications précédentes, les bandes (5) de secteurs étant décalées angulairement d'une face du support à l'autre.

5. Rotor selon l'une quelconque des revendications précédentes, les secteurs (7) comportant plusieurs tôles magnétiques superposées, encliquetées les unes sur les autres.

6. Rotor selon l'une quelconque des revendications précédentes, comportant une masselotte d'équilibrage (50), fixée sur le support, et/ou un circuit électronique, notamment au moins une diode de redressement, fixée sur le support (3).

7. Rotor selon l'une quelconque des revendications précédentes, le support comportant des nervures de rigidification (40) s'étendant chacune en direction radiale.

8. Rotor selon l'une quelconque des revendications précédentes, au moins deux secteurs adjacents (7) étant reliés entre eux par un pont de matière (8) venu de matière avec la tôle des secteurs.

9. Rotor selon la revendication précédente, comportant un évidement (29), notamment en forme de goute d'eau, adjacent au pont de matière (8).

10. Rotor selon l'une quelconque des revendications précédentes, les bandes (5) de secteurs (7) portant des bobinages (66).

11. Machine électrique tournante, notamment excitatrice d'alternateur, comportant un rotor (1) tel que défini dans l'une quelconque des revendications précédentes.

12. Machine selon la revendication 11, comportant un stator ayant un circuit magnétique réalisé avec des tôles découpées dans une matière différente de celle servant à réaliser les secteurs, notamment ayant une teneur en carbone supérieure.

13. Procédé de fabrication d'un rotor tel que défini dans l'une quelconque des revendications 1 à 10, comportant les étapes consistant à :
- découper une bande (5) de secteurs dans une tôle magnétique,
- cintrer la bande,
fixer la bande sur le support (3).

## Patentansprüche

1. Rotor (1) einer rotierenden elektrischen Maschine, insbesondere für eine Maschine mit gewickeltem Rotor oder mit Stromkommutierung, der aufweist:
- einen allgemein scheibenförmigen Träger (3) zur Montage des Rotors auf eine Welle,
- eine Vielzahl von Magnetsektoren (7), vorzugsweise in Form eines Bandes (5), das auf dem Träger befestigt ist,
wobei der Träger (3) am Umfang Kerben (30) aufweist, die sich mit Kerben (11) der Sektoren (7) überlagern, **dadurch gekennzeichnet, dass** der Rotor (1) auf zwei axial gegenüberliegenden Seiten des Trägers (3) Sektoren (7) aufweist.

2. Rotor nach Anspruch 1, wobei die Sektoren (7) zu Bändern (5) von Sektoren gehören, die je weniger als eine vollständige Drehung um den Rotor einnehmen, oder die Sektoren zu einem Band oder mehreren Bändern von Sektoren gehören, die über eine vollständige Umdrehung oder mehr als eine vollständige Umdrehung um sich selbst gewickelt sind.

3. Rotor nach Anspruch 1 oder 2, wobei jeder Sektor (7) zwei Halbzähne (9) aufweist, besser nur zwei Halbzähne (9) aufweist.

4. Rotor nach einem der vorhergehenden Ansprüche, wobei die Bänder (5) von Sektoren von einer Seite des Trägers zur anderen winkelmäßig versetzt sind.

5. Rotor nach einem der vorhergehenden Ansprüche, wobei die Sektoren (7) mehrere übereinanderliegende Magnetbleche aufweisen, die aufeinander eingerastet sind.

6. Rotor nach einem der vorhergehenden Ansprüche, der ein am Träger befestigtes Ausgleichsgewicht (50) und/oder eine Elektronikschaltung aufweist, insbesondere mindestens eine am Träger (3) befestigte Gleichrichterdiode.

7. Rotor nach einem der vorhergehenden Ansprüche, wobei der Träger Versteifungsrippen (40) aufweist, die sich je in radialer Richtung erstrecken.

8. Rotor nach einem der vorhergehenden Ansprüche, wobei mindestens zwei benachbarte Sektoren (7) durch eine Materialbrücke (8) miteinander verbunden sind, die aus dem gleichen Material wie das Blech der Sektoren besteht.

9. Rotor nach dem vorhergehenden Anspruch, der eine Aushöhlung (29), insbesondere in Form eines Wassertropfens, an die Materialbrücke (8) angrenzend aufweist.

10. Rotor nach einem der vorhergehenden Ansprüche, wobei die Bänder (5) von Sektoren (7) Wicklungen (66) tragen.

11. Rotierende elektrische Maschine, insbesondere Generator-Erregermaschine, die einen Rotor (1) wie in einem der vorhergehenden Ansprüche definiert aufweist.

12. Maschine nach Anspruch 11, die einen Stator aufweist, der einen Magnetkreis hat, der mit Blechen hergestellt wird, die aus einem anderen Material als dasjenige ausgeschnitten werden, das dazu dient, die Sektoren herzustellen, das insbesondere einen höheren Kohlenstoffgehalt hat.

13. Verfahren zur Herstellung eines Rotors wie in einem der Ansprüche 1 bis 10 definiert, das die Schritte aufweist, die darin bestehen:
- ein Band (5) von Sektoren aus einem Magnetblech auszuschneiden,
- das Band rundzubiegen,
- das Band auf dem Träger (3) zu befestigen.

## Claims

1. Rotor (1) of a rotating electric machine, notably for a wound-rotor or flux-switching machine, comprising:
- a support (3) having a generally discoid shape for mounting the rotor on a shaft,
- a plurality of magnetic segments (7) preferably in a strip (5), fastened onto the support,
the support (13) having, at the periphery, notches (30) which are superposed with notches (11) of the segments (7), **characterized in that** the rotor (1) comprises segments (7) on two axially opposite faces of the support (3).

2. Rotor according to Claim 1, the segments (7) belonging to strips (5) of segments which each occupy less than one complete revolution on the rotor, or the segments belonging to one or more strip(s) of segments wound on themselves over one complete revolution or more than one complete revolution.

3. Rotor according to any one of the preceding claims, each segment (7) comprising two half-teeth (9), or better, comprising only two half-teeth (9).

4. Rotor according to any one of the preceding claims, the strips (5) of segments being offset angularly from one face of the support to the other.

5. Rotor according to any one of the preceding claims, the segments (7) comprising a number of superposed magnetic plates, snap-fitted to one another.

6. Rotor according to any one of the preceding claims, comprising a balancing counterweight (50), fastened onto the support and/or an electronic circuit, notably at least one rectifying diode, fastened onto the support (3).

7. Rotor according to any one of the preceding claims, the support comprising rigidifying ribs (40) each extending in a radial direction.

8. Rotor according to any one of the preceding claims, at least two adjacent segments (7) being linked together by a bridge of material (8) made of the same material as the plate of the segments.

9. Rotor according to the preceding claim, comprising a void (29), notably in the form of a drop of water, adjacent to the bridge of material (8).

10. Rotor according to any one of the preceding claims, the strips (5) of segments (7) bearing windings (66).

11. Rotating electric machine, notably an alternator exciter, comprising a rotor (1) as defined in any one of the preceding claims.

12. Machine according to Claim 11, comprising a stator having a magnetic circuit produced with plates cut from a different material from that used to produce the segments, notably having a higher carbon content.

13. Method for manufacturing a rotor as defined in any one of Claims 1 to 10, comprising steps consisting in:
- cutting a strip (5) of segments from a magnetic plate,
- bending the strip,
- fastening the strip onto the support (3).
